# EUROPÄISCHE PATENTSCHRIFT

(11) **EP 1 103 314 B1**
(45) Veröffentlichungstag und Bekanntmachung des Hinweises auf die Patenterteilung: **04.06.2003**
(21) Anmeldenummer: 00250392.8
(22) Anmeldetag: 22.11.2000
(51) Int. Cl.: B09C 1/00, C02F 3/02

(54) **Verfahren und Vorrichtung zur Reinigung eines kontaminierten Grundwasserleiters**
Method and device for remediation of a contaminated aquifer
Procédé et dispositif pour assainir une nappe aquifère contaminée

(30) Priorität: 25.11.1999 DE 19957834
(43) Veröffentlichungstag der Anmeldung: 30.05.2001
(73) Patentinhaber: Berliner Wasserbetriebe Anstalt des öffentlichen Rechts, 10179 Berlin (DE)
(72) Erfinder: Luckner, Ludwig, Prof. Dr.-Ing., 01217 Dresden (DE); Rössner, Ute, Dr.-Ing., 01277 Dresden (DE); Ehbrecht, Hartmut, Dipl. -Ing., 13051 Berlin (DE)

(56) Entgegenhaltungen:
- DE-A- 2 951 464
- DE-A- 3 033 748
- US-A- 5 690 173

## Beschreibung

Die Erfindung betrifft ein Verfahren zur Reinigung eines kontaminierten Grundwasserleiters durch Sauerstoffeintrag und eine Vorrichtung zur Durchführung des Verfahrens.

Bei der Reinigung eines kontaminierten Grundwasserleiters ist es erforderlich, die im Grundwasser gelösten und an der Feststoffmatrix austauschbar gebundenen Schadstoffe zu entfernen. Eine weit verbreitete Reinigungstechnologie besteht darin, einen Spülkreislauf im kontaminierten Grundwasserleiter einzurichten. Bei diesem Verfahren wird verunreinigtes Grundwasser abgepumpt, oberirdisch aufbereitet und anschließend wieder in den Untergrund infiltriert. Dabei sind lange Behandlungszeiträume erforderlich, insbesondere dann, wenn der Hauptteil der Schadstoffe am Feststoff gebunden vorliegt und der begrenzende Faktor für den Schadstoffaustrag die Nachlieferung der Schadstoffe vom Feststoff in das Grundwasser ist.

Eine Intensivierung der hydraulischen Reinigung kann durch die Einlösung von Oxidationsmitteln in das Spülwasser erzielt werden. Oxidationsmittel dienen dem Abbau von organischen Schadstoffen, beispielsweise Mineralöle, chlorierte Kohlenwasserstoffe, aromatische und polyzyklische aromatische Kohlenwasserstoffe, und der Transformation anorganischer Schadstoffe wie Ammonium und Sulfide, sowie von Eisen und Mangan. Durch den Eintrag der Oxidationsmittel mit dem Infiltrationswasser in den kontaminierten Grundwasserleiter wird ein Teil der Schadstoffe bereits im Untergrund abgebaut und muss nicht mit dem Grundwasser gefördert und oberirdisch entfernt werden. Für eine Vielzahl organischer und anorganischer Schadstoffe ist Sauerstoff als Oxidationsmittel besonders geeignet. Das gasförmige Oxidationsmittel Sauerstoff ist somit unter Beachtung seiner begrenzten Löslichkeit in Wasser zu lösen.

Entwickelt sind Verfahren zur Sanierung kontaminierter Grundwasserleiter, bei denen das Infiltrationswasser in einem oberirdischen Reaktor bei Atmosphärendruck mit Sauerstoff angereichert und anschließend über einen Brunnen infiltriert wird (Hanstein, P.; Jungbauer, H.; Melzer, R.: Biologische In-situ-Sanierung durch Eingabe von reinem Sauerstoff in das Grundwasser. Terra-Tech 2, 1999, S. 46-48). Dieses Verfahren hat den Nachteil, dass nur Lösungskonzentrationen von maximal 50 mg/l Sauerstoff (O₂) im Infiltrationswasser erzielt werden können. Daher wurde in der Sanierungspraxis Wasserstoffperoxid (H202) aufgrund seiner nahezu unbegrenzten Wasserlöslichkeit zur in-situ Oxidation von organischen Schadstoffen eingesetzt. Die Konzentration des Oxidationsmittels richtet sich nach der Toxizität für Mikroorganismen und liegt zwischen 100 und 500 mg/l (Riss, A.; Barenschee, E. R.; Hemling, O.; Ripper, P.: Einsatz von Wasserstoffperoxid zum mikrobiellen Kohlenwasserstoffabbau. Labor- und Feldversuch in-situ. Gas- und Wasserfach 132, 1991, S. 115-126 und Pardieck, D. L., Bouwer, E. J.; Stone, A. T.: Hydrogen peroxide use to increase oxidant capacity for in situ bioremediation of contaminated soils and aquifers: A review. Journal of Contaminant Hydrology 9, 1992, S. 221-242).

Das Problem bei der Verwendung von H202 besteht im relativ schnellen katalytischen Zerfall des Stoffes in 02 und Wasser (H20) im Untergrund. Bei der Sanierung eines Gaswerkstandortes mit H202 mit einer Konzentration von 100 mg/l wurde ein Rückgang der Infiltrationsleistung der Brunnen innerhalb weniger Monate festgestellt (Stieber, M.: Erfahrungen beim biologischen in-situ-Abbau von Kohlenwasserstoffen in Grundwässern; Resümee und Beiträge des 12. DEHEMA-Fachgesprächs Umweltschutz; DECHEMA Frankfurt a. M. 1997, S. 387-399). Dieser Rückgang war primär auf unkontrollierte Entgasungsprozesse im brunnennahen Raum zurückzuführen.

Bekannt ist allgemein, dass die Beladung einer Flüssigkeit mit einem Gas vom Druck und der Temperatur abhängt, wobei der zeitliche Verlauf dieses Stoffaustauschvorganges von einer Reihe weiterer Faktoren abhängt, deren wesentlichste der Stoffübergangskoeffizient, die spezifische Austauschfläche und die Differenz zwischen der Gleichgewichtsbeladung und der gegebenen Beladung der Flüssigkeit sind. Die Veränderung der Beladung wird verfahrenstechnisch als Mischprozess der Phasen flüssig und gasförmig durch Begasen von Flüssigkeiten oder durch das Zerteilen der flüssigen Phase in einer Gasphase durchgeführt. Mit der Erzeugung großer Austauschflächen wird so eine Voraussetzung für einen effektiven Stoffübergang zwischen den Phasen geschaffen.

So wird in der DE 42 35 558 ein Verfahren und eine Vorrichtung beschrieben, wo in einem länglichen vertikalen Reaktor die Flüssigkeit mit dem Gas von oben einströmt, eine Begasungszone ausbildet und die nach unten über eine Lochplatte austretende Flüssigkeit ohne zusätzliche Gaszufuhr wiederum zur Ausbildung einer Blasenzone durch die mitgeführten, noch nicht gelösten Gasblasen als weitere Misch- und Gaslösungsstufe führt. Dieses Verfahren wurde für eine Gaslösung in Wasser unter geringem Druck, wenig über dem atmosphärischen Normaldruck von 1 bar, entwickelt und ist nicht anwendbar auf die Gegebenheiten in einem gesättigten Grundwasserleiter, bei dem die Druckverhältnisse mit zunehmender Tiefe naturgemäß ansteigen. Weiterhin bleibt der Effekt des Zerteilens der Flüssigkeit bei dieser einfachen Konstruktion als Lochplatte beschränkt.

Die Gasanreicherung einer Flüssigkeit hängt entscheidend von der Differenz des Gaspartialdrucks in der Flüssigkeit und den Partialdrücken im umgebenden Medium eines Gasgemisches wie beispielsweise Luft ab.

Nach der DE 29 51 464 ist ein Verfahren und eine Vorrichtung nach dem zweistufigen Verfahrensprinzip der Entgasung / Begasung bekannt. Dabei handelt es sich um zwei geschlossene Reaktoren, die in zwei Etagen oberirdisch angeordnet sind. Die Entgasung erfolgt bei einem Unterdruck von 0,1 bis 0,8 bar absolut. Dieses Verfahren wurde speziell für die Sauerstoffanreicherung in Fischzuchtbecken entwickelt.
Desweiteren ist ein Verfahren zur Begasung von Flüssigkeiten aus der DE 30 33 236 bekannt, bei dem zuerst eine Entgasung im offenen System und anschließend eine Entgasung im geschlossenen System bei Unterdruck durchgeführt wird.
Beide Verfahren sind darauf gerichtet, eine Sauerstoffanreicherung unter den Bedingungen wenig höher als Normaldruck zu erreichen und dabei vor allem eine Obersättigung sicher auszuschließen. Bei einer Wassertemperatur von 10°C und Normaldruck von 1 bar sollen somit bis ungefähr 40 mg O₂/l Übersättigungsprobleme vermieden werden können, womit die Anwendungsgrenze des beschriebenen Verfahrens gezogen ist. Ein weiterer Nachteil der vorgenannten Verfahren für die Aufbereitung anaerober, kontaminierter Grundwässer im Untergrund ist die oberirdische Positionierung der Reaktoren, weil dadurch der im Grundwasserleiter naturgemäß vorhandene Druck nicht für den Prozess der Begasung genutzt wird.

Ein Verfahren zur Aufbereitung von Grundwasser im Grundwasserleiter wird in der DE 30 33 748 beschrieben. Dabei wird Sauerstoffgas direkt in den Schluckbrunnen injiziert, wobei der Brunnendeckel gasdicht gegen die Atmosphäre abschließt. Somit ist es möglich, die Sauerstoffanreicherung des Wassers im Brunnen unter Druck durchzuführen. Bei diesem Verfahren ist nachteilig, dass dem Sauerstoffbegasungsprozess keine Entgasung vorgeschaltet werden kann. Ein wesentlicher Nachteil dieses Verfahrens besteht vor allem darin, dass die durch den Sauerstoffeintrag induzierten Reaktionen bereits unmittelbar im Brunnen ablaufen. Anaerobe Grundwässer besitzen einen erhöhten Eisen- und Mangangehalt, so dass die Oxidationsprozesse zu einer Verockerung direkt im Brunnenraum und Brunnenfilter führen. Dadurch reduziert sich die Infiltrationsleistung des Schluckbrunnens und der damit verbundene Sauerstoffeintrag in den umgebenden anaeroben kontaminierten Grundwasserleiter erheblich und die Durchführung des Verfahrens wird somit durch in der Vorrichtung entstehende Reaktionsprodukte behindert. Nachteilig ist weiterhin, dass der weitere Porenraum des Grundwasserleiters, der eigentliche Reaktionsraum, nur unzureichend und nach längeren Fließzeiten erreicht wird, da keine Erhöhung des hydraulischen Potenzials durch einen Infiltrationsstrom von außen stattfindet.

Auch sind Verfahren und Vorrichtungen zur Entfernung von Verunreinigungen aus Grundwasser mit Hilfe von in Brunnen installierten Einrichtungen bekannt. Es werden hier Reinigungsstufen wie Strippkolonne, Aktivkohlefilter oder lonenaustauscher an Stelle der üblichen technischen Lösungen oberhalb der Geländeoberfläche in den Brunnenschacht hinein und somit unterhalb der Geländeoberfläche eingebaut, wie in den DE 38 42 740, DE 41 38 414 und DE 42 02 814 beschrieben wird. Das Verfahrensprinzip des pump-and-treat wird mit geringerem Energieaufwand angewandt, da das zu behandelnde Grundwasser nicht über die Geländeoberfläche gehoben werden muss. Je nach Art der Verunreinigung werden auch Vorrichtungen beschrieben, die nur von mehreren Reinigungsstufen unterirdisch in dem Brunnen anordnen, beispielsweise für das Austreiben flüchtiger Stoffe in der DE 40 40 820 oder für die Wasseraufbereitung über Filter in der DE 39 33 426.

Bei diesen Verfahren wird der Grundwasserleiter nicht als Reaktorraum genutzt, sondern das Grundwasser mit seinen Schadstoffen in Reaktoren im Brunnen behandelt. Der Nachteil dieser Verfahren ist, dass die Effektivität von der Nachlieferung der Schadstoffe vom Feststoff des Grundwasserleiters in das strömende Grundwasser abhängt und kein zusätzliches hydraulisches Potenzial geschaffen wird. Dadurch entstehen lange Behandlungszeiträume. Bei konzentrationsabhängigen Retardationseffekten werden die installierten Reaktoren zunehmend weniger ausgenutzt.

Aufgabe der Erfindung ist es, ein Verfahren und eine Vorrichtung anzugeben, die eine kostengünstige und schnelle Aufbereitung von kontaminiertem Grundwasser bei gleichzeitiger Dekontamination des verunreinigten Grundwasserleiters ermöglicht.

Erfindungsgemäß wird die Aufgabe dadurch gelöst, dass der Sauerstoffeintrag in den Grundwasserleiter durch Entgasung des Infiltrationswassers und Begasung mit Sauerstoff unterirdisch im Infiltrationsbrunnen unter Überdruck bis zur Sättigungsgrenze in Abhängigkeit vom anstehenden hydrostatischen Druck im Grundwasserleiter durchgeführt wird.
Dadurch wird die maximal mögliche Sauerstoffsättigung des Infiltrationswassers im Grundwasserleiter erzielt. Das Infiltrationswasser als Träger des Oxidationsmittels Sauerstoff breitet sich in Abhängigkeit vom hydraulischen Gradienten aus. Der hydraulische Gradient wird zumeist durch Entnahmebrunnen erhöht.

Das mobile Oxidationsmittel Sauerstoff bewirkt in erster Linie die Oxidation der immobilen am Feststoff des Grundwasserleiters gebundenen Schadstoffe, die durch die hydraulische Spülung des Untergrundes nicht effektiv entfernt werden können. Der Reaktorraum für die Reinigung ist der Grundwasserleiter selbst. Durch die relativ langsame Fließgeschwindigkeit des sauerstoffangereicherten Infiltrationswassers und das große Reaktorvolumen werden die bei Grundwassertemperatur langsam ablaufenden mikrobiellen Oxidationsprozesse als Reinigungsmechanismen effektiv genutzt. Als Infiltrationswasser wird Trinkwasser oder durch Enteisenung / Entmanganung aufbereitetes Grundwasser verwendet. Dadurch wird die Gefahr der Verockerung im Filterbereich des Infiltrationsbrunnens erheblich verringert, die hydraulische Leistungsfähigkeit des Infiltrationsbrunnens und damit die Durchführung des Verfahrens werden über lange Zeit gesichert.

Eine weitere Ausgestaltung des erfindungsgemäßen Verfahrens sieht vor, dass die Sauerstoffbegasung des zuvor entgasten Infiltrationswassers in einem unter Überdruck stehenden Gasraum durchgeführt wird, wenn die erforderliche Lösungskonzentration geringer als die Sättigungskonzentration ist.

Die oben genannte Aufgabe wird erfindungsgemäß ferner durch die vorrichtung nach Patentanspruch 3 gelöst.

Zweckmäßige Weiterbildungen der Erfindung sind Gegenstand der betreffenden abhängigen Ansprüche.

Die erfindungsgemäße Vorrichtung besteht darin, dass unterirdisch in einem Infiltrationsbrunnen vertikal untereinander zwei Rohrreaktoren in Reihe geschaltet angeordnet sind. In diesen Reaktoren ist das Infiltrationswasser mittels Feindüsen feindispers in einem Gasraum versprüht, wobei im oberen Rohrreaktor der Gasraum durch den Betrieb einer Vakuumpumpe unter Unterdruck steht und im unteren Rohrreaktor der Druckgasraum durch den Druck des zugeführten Sauerstoffgasstroms unter Überdruck steht.

Zwischen den beiden Rohrreaktoren ist eine Rohrleitung angeordnet, in der sich bei nicht ausreichender Brunnentiefe eine vertikal nach unten fördernde Unterwassermotorpumpe befindet, die den erforderlichen Eingangsdruck für die Feindüse des unteren Reaktors aufbaut.

Eine weitere Möglichkeit ist, dass bei nicht ausreichender Brunnentiefe zwischen den beiden Rohrreaktoren eine Rohrleitung angeordnet ist, in der sich eine nach oben fördernde Unterwassermotorpumpe mit einem Umströmungsmantel oder -kanal befindet, die ebenfalls den Eingangsdruck für die Feindüse aufbaut.

Der vorwiegend mit Wasser gefüllte Teil des unteren Reaktors weist eine ausreichende Länge zum Lösen der Sauerstoffgasblasen in das Infiltrationswasser auf.

Am unteren Ende des Rohrreaktors zur Sauerstoffbegasung ist ein Feinsieb aus hydrophobem Material zum Auskämmen überschüssiger Gasblasen und deren Rückführung in den Druckgasraum angeordnet. Der Druckgasraum ist durch eine Druckausgleichsleitung, die in der Tiefe der maximalen Gasraumhöhe endet, mit dem anstehenden Brunnenwasser verbunden. Die Höhe des Druckgasraumes wird bestimmt durch eine Differenzdruckmessung zwischen dem Druck im Druckgasraum und dem Wasserdruck im Brunnenrohr. Die Regulierung der Höhe erfolgt durch die Änderung des Volumenstroms von Sauerstoffgas oder Infiltrationswasser.

Der Vorteil des erfindungsgemäßen Verfahrens und der Vorrichtung zur Duchführung des Verfahrens ist der Eintrag von sauerstoffangereichertem Infiltrationswasser, dessen Gaspartialdruck im Gleichgewicht mit dem Wasserdruck des anstehenden Grundwasserleiters steht. Dabei ist der Wasserdruck an der Filteroberkante des Infiltrationsbrunnens maßgebend. Die maximal mögliche Sauerstoffkonzentration im Untergrund bewirkt eine hohe Ausbreitungsgeschwindigkeit der Sauerstofffront im kontaminierten Grundwasserleiter. Beim Aufstieg der Stromlinien vom Infiltrationsbrunnen, der Ausbreitung des Infiltrates im Grundwasserleiter, nimmt der Wasserdruck entlang der Strompfade ab und führt zur Entgasung und damit zur Akkumulation von Sauerstoffgasblasen im oberen Bereich des Grundwasserleiters. Dadurch wird eine Reduzierung der hydraulischen Durchlässigkeit des oberen Bereiches im Grundwasserleiter bewirkt und eine bevorzugte Ausbreitung und Durchströmung des Grundwasserleiters mit sauerstoffangereichertem Grundwasser erzielt.

Die Erfindung soll nachstehend an einem Ausführungsbeispiel näher erläutert werden.

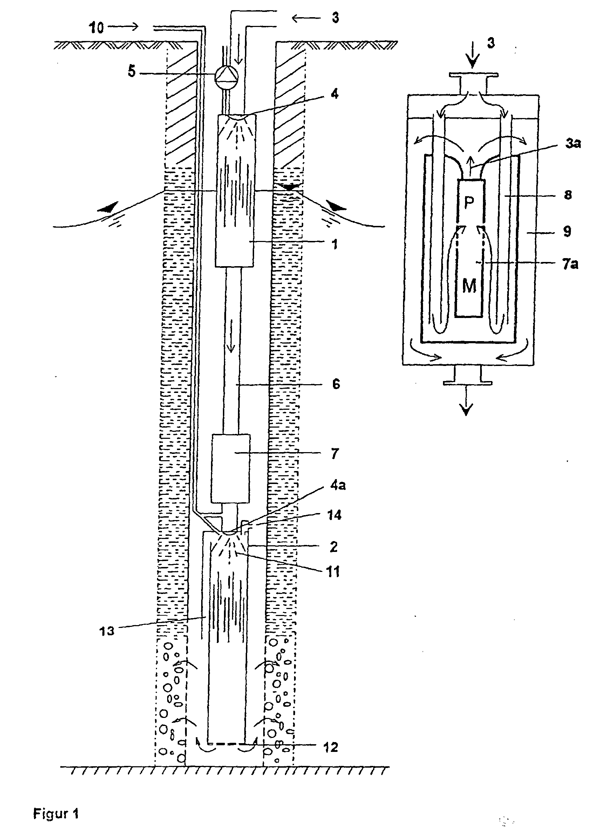

Figur 1 zeigt die vertikal übereinander angeordneten Rohrreaktoren, den oberen Rohrreaktor 1 zur Entgasung und den unteren Rohrreaktor 2 zur Sauerstoffbegasung des Infiltrationswassers 3 in einem Rohrbrunnen. Das Infiltrationswasser 3 strömt über eine Feindüse 4 in den oberen Rohrreaktor 1, in dem ein Unterdruck von 0,1 bis 0,2 bar absolut durch eine Vakuumpumpe 5 erzeugt wird. Das Infiltrationswasser 3 durchströmt den Rohrreaktor 1 und wird dabei entgast. Die aus dem Infiltrationswasser 3 ausgeschiedenen Gase werden durch die Vakuumpumpe 5 dem oberen Rohrreaktor 1 entzogen und abgeführt. Das entgaste Infiltrationswasser 3 wird durch eine Rohrleitung 6 zum unteren Rohrreaktor 2 transportiert. Die Rohrleitung 6 muss so lang sein, dass der hydrostatische Wasserdruck den erforderlichen Eingangsdruck der Feindüse 4a im unteren Rohrreaktor 2 übersteigt. Reicht die Brunnentiefe dafür nicht aus, wird eine vertikal nach unten fördernde Unterwassermotorpumpe 7 zum Aufbau des erforderlichen Wasserdrucks für die Feindüse 4a in der Rohrleitung 6 angeordnet. Es ist ebenfalls möglich, eine vertikal nach oben fördernde Unterwassermotorpumpe 7a einzusetzen. Diese Pumpe 7a muss dann einen Umströmungsmantel oder -kanal 8 besitzen, der die Fließrichtung des Infiltrationswassers 3a umkehrt. Das aus der Pumpe 7a ausströmende Infiltrationswasser 3a wird durch einen zweiten Umströmungsmantel oder -kanal 9 nach unten geführt. Das Infiltrationswasser 3 wird über die Feindüse 4a in dem durch den Sauerstoffgasstrom 10 gefüllten Druckgasraum 11 des Rohrreaktors 2 verdüst. Im wassergefüllten unteren Teil des Rohrreaktors 2 findet eine weitgehende Einlösung der Sauerstoffgasbläschen durch weiter erhöhten Wasserdruck statt. Am unteren Ende des Rohrreaktors 2 befindet sich ein Feinsieb 12, das noch vorhandene Gasblasen einer definierten Größe auskämmt. Diese Gasblasen wachsen auf dem Feinsieb 12 durch Koalenszenzeffekte auf und steigen nach oben zurück in den mit Sauerstoffgas gefüllten Druckgasraum 11 auf. Durch das Feinsieb 12 wird ein Austritt von Gasblasen in den Filterbereich des Infiltrationsbrunnens und somit in den anstehenden Grundwasserleiter verhindert. Der Druckgasraum 11 im Rohrreaktor 2 wird in seiner Höhe begrenzt, indem er durch eine Druckausgleichsleitung 13 mit dem Brunnenwasser im Brunnenrohr verbunden ist. Die Druckausgleichsleitung 13 endet in der Tiefe der maximal zulässigen Höhe des Druckgasraumes 11. Die Höhe des Druckgasraumes 11 wird durch eine Differenzdruckmessung 14 zwischen dem Druck im Gasraum 11 und dem Wasserdruck im Brunnenrohr erfasst. Die Regulierung der Höhe des Druckgasraumes 11 erfolgt durch eine Änderung des Sauerstoffgasstroms 10 oder des lnfiltrationswasserstroms 3.

### Aufstellung der verwendeten Bezugszeichen

### "Verfahren und Vorrichtung zur Reinigung eines kontaminierten Grundwasserleiters"

- 1: Rohrreaktor zur Entgasung
- 2: Rohrreaktor zur Begasung
- 3: Infiltrationswasser
- 3a: Infiltrationswasser mit Fließrichtungsumkehr
- 4: Feindüse in 1
- 4a: Feindüse in 2
- 5: Vakuumpumpe
- 6: Rohrleitung
- 7: Unterwassermotorpumpe, nach unten fördernd
- 7a: Unterwassermotorpumpe, nach oben fördernd
- 8: Umströmungsmantel oder -kanal, innen
- 9: Umströmungsmantel oder -kanal, außen
- 10: Sauerstoffgasstrom
- 11: Druckgasraum von 2
- 12: Feinsieb
- 13: Druckausgleichleitung
- 14: Differenzdruckmessung

## Patentansprüche

1. Verfahren zur Reinigung eines kontaminierten Grundwasserleiters durch Sauerstoffeintrag
**dadurch gekennzeichnet, dass**
der Sauerstoffeintrag in den Grundwasserleiter durch Entgasung des Infiltrationswassers (3) und Begasung mit Sauerstoff unterirdisch im Infiltrationsbrunnen unter Überdruck bis zur Sättigungsgrenze in Abhängigkeit vom anstehenden hydrostatischen Druck im Grundwasserleiter durchgeführt wird.

2. Verfahren nach dem Anspruch 1,
**dadurch gekennzeichnet, dass**
die Begasung des zuvor entgasten Infiltrationswassers (3) mit Sauerstoff in einem unter Überdruck stehenden Gasraum durchgeführt wird.

3. Vorrichtung zur Durchführung des Verfahrens nach den Ansprüchen 1 und 2,
**dadurch gekennzeichnet, dass**
unterirdisch in einem Infiltrationsbrunnen vertikal untereinander zwei Rohrreaktoren (1; 2) in Reihe geschaltet angeordnet sind und in die das Infiltrationswasser (3) mittels Feindüsen (4; 4a) feindispers in einem Gasraum versprüht ist, wobei im oberen Rohrreaktor (1) der Gasraum durch den Betrieb einer Vakuumpumpe (5) unter Unterdruck und im unteren Rohrreaktor (2) der Druckgasraum (11) durch den Druck des zugeführten Sauerstoffstromes (10) unter Überdruck stehen.

4. Vorrichtung nach dem Anspruch 3,
**dadurch gekennzeichnet, dass**
zwischen den beiden Rohrreaktoren (1; 2) eine Rohrleitung (6) angeordnet ist, in der sich bei nicht ausreichender Brunnentiefe eine vertikal nach unten fördernde Unterwassermotorpumpe (7) befindet.

5. Vorrichtung nach dem Anspruch 3,
**dadurch gekennzeichnet, dass**
zwischen den beiden Rohrreaktoren (1; 2) eine Rohrleitung (6) angeordnet ist, in der sich bei nicht ausreichender Brunnentiefe eine vertikal nach oben fördernde Unterwassermotorpumpe (7a) mit Umströmungsmantel oder -kanat (8; 9) befindet.

6. Vorrichtung nach dem Anspruch 3,
**dadurch gekennzeichnet, dass**
der vorwiegend mit Wasser gefüllte Teil des unteren Reaktors (2) eine ausreichende Länge zum Einlösen der Sauerstoffgasblasen in das Infiltrationswasser (3) aufweist.

7. Vorrichtung nach dem Anspruch 3,
**dadurch gekennzeichnet, dass**
am unteren Ende des Rohrreaktors (2) zur Sauerstoffbegasung ein Feinsieb (12) aus hydrophobem Material zum Auskämmen überschüssiger Gasblasen und deren Rückführung in den Druckgasraum (11) angeordnet ist.

8. Vorrichtung nach dem Anspruch 3,
**dadurch gekennzeichnet, dass**
der Druckgasraum (11) durch eine Druckausgleichsleitung (13), die in der Tiefe der maximalen Gasraumhöhe endet, mit dem anstehenden Brunnenwasser verbunden ist.

9. Vorrichtung nach dem Anspruch 3,
**dadurch gekennzeichnet, dass**
eine Differenzdruckmessung (14) zur Bestimmung der Differenz zwischen dem Druck im Druckgasraum (11) und dem Wasserdruck im Brunnenrohr angeordnet ist.

## Claims

1. Method of cleaning a contaminated groundwater duct by oxygen feed, **characterised in that** the oxygen feed to the groundwater is carried out by degassification of the infiltration water (3) and gasification with oxygen subterraneously in infiltration shafts at excess pressure up to the saturation limit in dependence on the prevailing hydrostatic pressure in the groundwater duct.

2. Method according to claim 1, **characterised in that** the gasification of the previously degasified infiltration water (3) by oxygen is carried out in a gas chamber standing under excess pressure.

3. Device for carrying out the method according to claims 1 and 2, **characterised in that** two tube reactors (1; 2) connected in series are arranged vertically one below the other subterraneously in an infiltration shaft and into these the infiltration water (3) is sprayed in fine dispersion into a gas chamber by means of fine nozzles (4; 4a), wherein in the upper tube reactor (1) the gas chamber is disposed under underpressure by the operation of a vacuum pump (5) and in the lower tube reactor (2) the pressure gas chamber (11) is disposed under excess pressure by the pressure of the supplied oxygen flow (10).

4. Device according to claim 3, **characterised in that** arranged between the two tube reactors (1; 2) is a pipe duct (6) in which in the case of insufficient shaft depth a vertically downwardly conveying submerged motor pump (7) is disposed.

5. Device according to claim 3, **characterised in that** arranged between the two tube reactors (1; 2) is a pipe duct (6) in which in the case of insufficient shaft depth a vertically upwardly conveying submerged motor pump (7) with a casing or channel (8, 9) for flow therearound is disposed.

6. Device according to claim 3, **characterised in that** the part of the lower reactor (2) predominantly filled with water has a sufficient length for release of the oxygen bubbles into the infiltration water (3).

7. Device according to claim 3, **characterised in that** a fine sieve (12) of hydrophobic material for drawing out excessive gas bubbles and return thereof to the gas pressure chamber (11) is arranged at the lower end of the tube reactor (2) for oxygen gasification.

8. Device according to claim 3, **characterised in that** the gas chamber (11) is connected with the shaft water present by a pressure equalising duct (13) which ends at the level of the maximum gas chamber height.

9. Device according to claim 3, **characterised in that** a pressure difference measurement (14) for determining the difference between the pressure in the gas pressure chamber (11 ) and the water pressure is arranged in the shaft pipe.

## Revendications

1. Procédé pour assainir une nappe aquifère contaminée par apport d'oxygène,
**caractérisé en ce que**
on effectue l'apport d'oxygène dans la nappe aquifère par dégazage de l'eau d'infiltration (3) et gazage avec l'oxygène de manière souterraine dans des puits d'infiltration, avec surpression jusqu'à la limite de saturation en fonction de la pression hydrostatique existant dans la nappe aquifère

2. Procédé selon la revendication 1,
**caractérisé en ce qu'**
on effectue le gazage de l'eau d'infiltration (3) préalablement dégazée, avec de l'oxygène dans un volume de gaz mis en pression.

3. Dispositif pour la mise en oeuvre du procédé selon les revendications 1 et 2,
**caractérisé en ce qu'**
on branche en série, de manière souterraine, deux réacteurs tubulaires (1, 2) verticalement l'un derrière l'autre dans un puits d'infiltration et on pulvérise dans ces réacteurs, avec des buses fines (4, 4a) l'eau d'infiltration (3) finement dispersée dans un volume de gaz, et dans le réacteur tubulaire supérieur (1) le fonctionnement d'une pompe à vide (5) met le volume de gaz en dépression et dans le réacteur tubulaire inférieur (2) le volume de gaz sous pression (11), est en surpression par la pression de la veine d'oxygène d'alimentation (10).

4. Dispositif selon la revendication 3,
**caractérisé par**
une conduite tubulaire (6) entre les deux réacteurs tubulaires (1, 2) dans laquelle se trouve une moto-pompe immergée (7) refoulant verticalement vers le bas en cas de profondeur de puits insuffisante.

5. Dispositif selon la revendication 3,
**caractérisé par**
une conduite tubulaire (6) entre les deux réacteurs tubulaires (1, 2) dans laquelle on a une moto-pompe immergée (7a), refoulant verticalement vers le haut en cas de profondeur de puits insuffisante, cette pompe ayant une chemise extérieure ou un canal (8, 9).

6. Dispositif selon la revendication 3,
**caractérisé en ce que**
la partie du réacteur inférieur (2) principalement remplie avec de l'eau a une longueur suffisante pour dissoudre les bulles d'oxygène gazeux dans l'eau d'infiltration (3).

7. Dispositif selon la revendication 3,
**caractérisé en ce qu'**
à l'extrémité inférieure du réacteur tubulaire (2), pour le gazage avec de l'oxygène on a un tamis fin (12) en matière hydrophobe pour retenir les bulles de gaz en excédent et les reconduire dans le volume de gaz (11).

8. Dispositif selon la revendication 3,
**caractérisé en ce que**
le volume de gaz sous pression (11) se termine par une conduite d'équilibrage de pression (13) qui arrive à la profondeur de la hauteur maximale de gaz et est reliée à l'eau de source existante.

9. Dispositif selon la revendication 3,
**caractérisé par**
une mesure de pression différentielle (14) pour déterminer la différence entre la pression dans le volume de gaz sous pression (11) et la pression de l'eau dans le tube du puits.
